# EUROPÄISCHE PATENTSCHRIFT

(11) **EP 1 318 050 B1**
(45) Veröffentlichungstag und Bekanntmachung des Hinweises auf die Patenterteilung: **29.12.2004**
(21) Anmeldenummer: 02026042.8
(22) Anmeldetag: 22.11.2002
(51) Int. Cl.: B60R 16/02

(54) **E-Anlage eines Kraftfahrzeuges**
Electric installation of a vehicle
Installation électrique d'un véhicule

(30) Priorität: 07.12.2001 DE 10160290
(43) Veröffentlichungstag der Anmeldung: 11.06.2003
(73) Patentinhaber: AUDI AG, 85045 Ingolstadt (DE)
(72) Erfinder: Schmidt, Werner, 85049 Ingolstadt (DE)
(74) Vertreter: Thielmann, Frank

(56) Entgegenhaltungen:
- DE-A- 3 725 459
- DE-A- 4 115 971
- DE-A- 4 230 636
- DE-A- 4 414 662
- FR-A- 2 737 054

## Beschreibung

Die Erfindung betrifft ein Kraftahrzeug mit E-Anlage sowie ein Verfahren zur Verkabelung einer E-Anlage eines Kraftfahrzeuges.

Die DE-A-4 230 636 offenbart ein Kraftfahrzeug mit E-Anlage, wobei das Kraftfahrzeug einen in einem Motorraum angeordneten, elektrisch angetriebenen Anlasser, eine den Anlasser mit elektrischer Energie versorgende Batterie und ein Anlasser und Batterie verbindendes Batterie-Plus-Kabel aufweist, wobei das Batterie-Plus-Kabel mindestens abschnittsweise an einem biegesteifen Fahrzeugstrukturteil angeordnet ist, sowie ein Verfahren zur Verkabelung einer E-Anlage eines Kraftfahrzeuges, bei dem ein Batterie-Plus-Kabel auf einem biegesteifen Fahrzeugstrukturteil angeordnet wird.

Die E-Anlage eines Kraftfahrzeuges weist im allgemeinen einen in einem Motorraum angeordneten, elektrisch angetriebenen Anlasser, eine den Anlasser mit elektrischer Energie versorgende Batterie und ein Anlasser und Batterie verbindendes Batterie-Plus-Kabel auf. Aus der Praxis ist eine Anordnung des Batterie-Plus-Kabels bekannt, bei der das Batterie-Plus-Kabel über eine Motorstütze geführt wird und mit diversen Befestigungshilfsmitteln, beispielsweise Kabelführungen und Befestigungselementen befestigt wird.

Aus DE 296 21 880 U1 ist ferner bekannt, ein elektrisches Verbindungskabel für elektrische Funktionselemente von Kraftfahrzeugen mit einem Isoliermantel zu versehen, der außenseitig mit Fasermaterial beflockt ist. Solche elektrischen Verbindungskabel können gemäß der genannten Schrift frei in Karosseriehohlräumen verlegt werden, ohne daß es durch das Verbindungskabel zu einer Geräuschbelästigung kommt.

Bei in Kraftfahrzeugen verlegten Batterie-Plus-Kabeln besteht die Gefahr, daß bei Unfällen das Batterie-Plus-Kabel derart geschädigt wird, daß es zu einem Kurzschluß zwischen dem Batterie-Plus-Kabel und leitenden Fahrzeugteilen kommt. Ferner können Kurzschlüsse dadurch entstehen, daß das Batterie-Plus-Kabel durchscheuert oder korrodiert.

Der Erfindung liegt die Aufgabe zugrunde, die Sicherheit einer E-Anlage eines Kraftfahrzeuges bei oder nach Unfällen zu erhöhen und damit auch eine potentielle Brandgefahr zu verringern. Ferner soll die Verlegung des Batterie-Plus-Kabels erleichtert werden.

Die Lösung dieser Aufgabe erfolgt erfindungsgemäß mit den Merkmalen der Ansprüche 1 bzw. 6.

Gemäß der Erfindung ist bei einer E-Anlage eines Kraftfahrzeuges vorgesehen, daß das Batterie-Plus-Kabel mindestens abschnittsweise in einem biegesteifen Fahrzeugstrukturteil angeordnet ist. Durch die Anordnung in einem biegesteifen Fahrzeugstrukturteil wird eine Schädigung des Batterie-Plus-Kabels im Falle einer Kollision verhindert und es wird femer vermieden, daß das Batterie-Plus-Kabel im normalen Betrieb scheuert und Schaden nimmt.

Vorzugsweise ist das Batterie-Plus-Kabel mindestens abschnittsweise in einem als biegesteifen Fahrzeugstrukturteil vorgesehenen Rohrelement angeordnet. Rohrelemente haben konstruktionsbedingt von sich aus eine sehr hohe Biegesteifigkeit, welche in dieser Form nicht bei Karosserieteilen zu finden ist, insbesondere nicht bei steifen der flächenförmigen Karosserieteilen.

Gemäß einer bevorzugten Ausführungsform ist das Batterie-Plus-Kabel mindestens abschnittsweise in einem Längsträger oder Hilfsrahmen, insbesondere einem Motorhilfsrahmen angeordnet. Die genannten Fahrzeugstrukturteile weisen innerhalb eines Kraftfahrzeuges die höchste Biegesteifigkeit auf und haben zudem den Vorteil, daß mit ihnen große Strecken überbrückt werden.

Besondere Vorteile zeigen sich, wenn die E-Anlage einen Generator aufweist, wobei das Batterie-Plus-Kabel zur Verbindung des Generators mit der Batterie mindestens abschnittsweise in einem biegesteifen Fahrzeugstrukturteil, insbesondere in einem Rohrelement, insbesondere in einem Längsträger oder Hilfsrahmen angeordnet ist. Bei einer solchen Ausgestaltung sind alle Kabel, die hohe Ströme leiten und damit eine potentielle Brandquelle darstellen, sicher angeordnet.

Eine lose Anordnung des Batterie-Plus-Kabels in einem biegesteifen Fahrzeugstrukturteil hat den Vorteil einer kostengünstigen Montage. Dieser Vorteil ergibt sich ferner, wenn bei der Verkabelung der E-Anlage eines Kraftfahrzeuges, wenn ein Batterie-Plus-Kabel vor der Bestückung des Kraftfahrzeuges oder einer Kraftfahrzeugbaugruppe mit einem Anlasser und/oder einem Generator in einem biegesteifen Fahrzeugstrukturteil angeordnet wird.

Weitere vorteilhafte Ausgestaltungen und Weiterbildungen der Erfindung ergeben sich aus den Unteransprüchen sowie aus der Beschreibung im Zusammenhang mit den Zeichnungen.

Es zeigen:
- Fig. 1: den Frontbereich eines Kraftfahrzeuges mit einer erfindungsgemäßen E-Anlage, und
- Fig. 2: einen Schnitt durch einen Arm eines Hilfsrahmens gemäß der Linie II-II in Fig. 1.

Im Frontbereich 10 eines Kraftfahrzeuges findet sich ein Motorraum 12, welcher von Karosserieblechen 14 umgeben ist. Diese Karosseriebleche 14 werden von Längsträgem 16 getragen, die rohr- oder kastenartig ausgebildet sind und in Längsrichtung des Kraftfahrzeuges an dessen beiden Seiten verlaufen. Der Heckbereich (nicht gezeigt) ist im wesentlichen genauso ausgebildet, wobei anstelle des Motorraumes ein Kofferraum angeordnet ist.

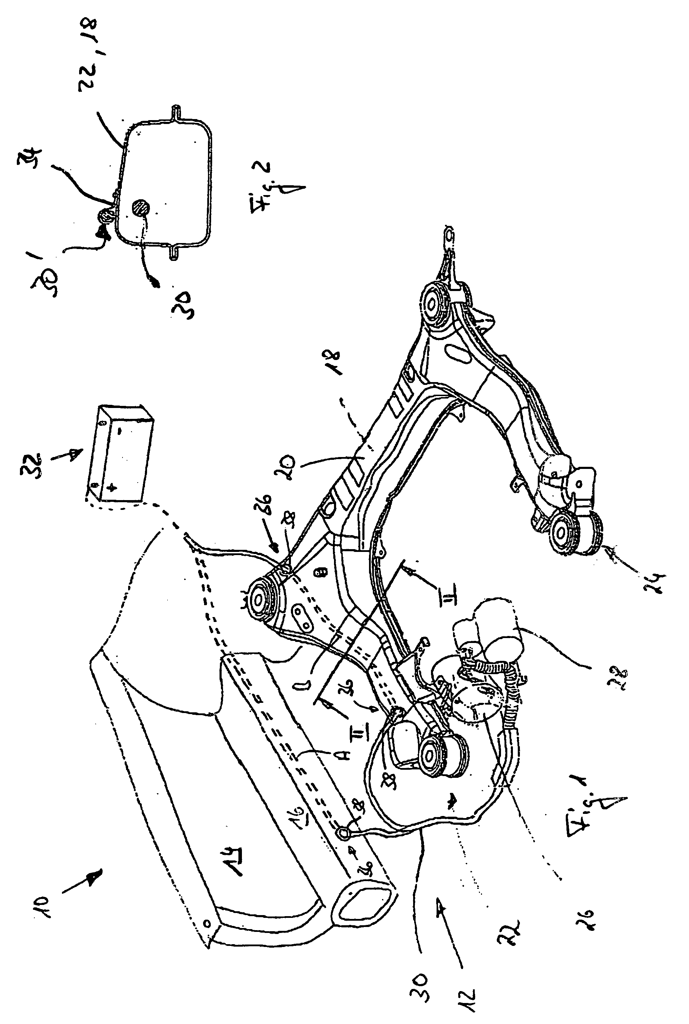

Am unteren Ende des Motorraumes 12 befindet sich ein Hilfsrahmen 18, dessen quer zur Fahrtrichtung und den Längsträgern 16 verlaufender erster Abschnitt 20 eine Vorderachse bildet. Zwei von dem querverlaufenden Abschnitt 20 im wesentlichen senkrecht nach vorne abragende Arme 22, 24 dienen der Halterung einer Antriebsmaschine (nicht gezeigt) sowie diverser Hilfsaggregate. Von diesen Hilfsaggregaten sind in Fig. 1 ein Generator 26 sowie ein Anlasser 28 gezeigt, welche über ein Batterie-Plus-Kabel 30 mit einer im Kofferraum (nicht gezeigt) angeordneten Batterie 32 verbunden sind.

Für die Verlegung des Batterie-Plus-Kabels 30 sind zwei Optionen vorgesehen, nämlich einerseits die Verlegung gemäß dem Pfad A durch den Längsträger 16 oder gemäß dem Pfad B durch den Hilfsrahmen 18. Diese für den Frontbereich 10 gezeigte erfindungsgemäße Anordnung ist auch im Heckbereich entsprechend gemäß der Erfindung realisierbar.

In Fig. 2 ist gezeigt, wie das Batterie-Plus-Kabel 30 in dem Arm 22 des Hilfsrahmens 18 angeordnet sein kann. Fig. 2 zeigt ferner, wie ein Batterie-Plus-Kabel 30 gemäß der Erfindung an der Außenseite des Hilfsrahmens 18 mittels einer Schelle 34 angeordnet sein könnte. Anstelle einer Schelle 34 sind auch Löcher oder Schweißbolzen an dem Hilfsrahmen anordenbar, die mit Clips oder Kabelführungen zusammenwirken.

Zum Schutz des Batterie-Plus-Kabels 30 sind an den Öffnungen 36 des Längsträgers 16 bzw. des Hilfsrahmens 18 Durchführungstüllen 38 oder an dem Batterie-Plus-Kabel 30 angeordnete Clips (nicht gezeigt) vorgesehen. Die Öffnungen 36 sind so groß gewählt, daß sie ein leichtes Einfädeln das Batterie-Plus-Kabels 30 auch mit einer Kabelführung ermöglichen.

Das Verfahren zur Verkabelung einer E-Anlage eines Kraftfahrzeuges zeichnet sich dadurch aus, daß ein Batterie-Plus-Kabel vor der Bestückung des Kraftfahrzeuges oder Kraftfahrzeugbaugruppe mit einem Anlasser und oder einem Generator in einem biegesteifen Fahrzeugstrukturteil angeordnet wird. Dabei wird vorzugsweise zur Montage des Batterie-Plus-Kabels eine Kabelführung aus Kunststoff oder Metall verwendet, mit der das Batterie-Plus-Kabel in oder durch das Fahrzeugstrukturteil ein- bzw. hindurchgefädelt werden kann. Auf eine Befestigung in dem Fahrzeugstrukturteil kann verzichtet werden, wenn das Fädeln durch selbige kein großes Problem darstellt und wenn keine Geräuschbildung durch klappern und kein aufscheuern des Batterie-Plus-Kabels durch Mikrobewegungen zu erwarten sind.

## Patentansprüche

1. Kraftfahrzeug mit E-Anlage, wobei das Kraftfahrzeug einen in einem Motorraum (10) angeordneten, elektrisch angetriebenen Anlasser (28), eine den Anlasser (28) mit elektrischer Energie versorgende Batterie (32) und ein Anlasser (28) und Batterie (32) verbindendes Batterie-Plus-Kabel (30) aufweist, wobei das Batterie-Plus-Kabel (30) mindestens abschnittsweise in einem biegesteifen Fahrzeugstrukturteil (16, 22) angeordnet ist.

2. Kraftfahrzeug mit E-Anlage nach Anspruch 1, **dadurch gekennzeichnet, daß** das Batterie-Plus-Kabel (30) mindestens abschnittsweise in einem als biegesteifem Fahrzeugstrukturteil vorgesehen Rohelement (16, 18) angeordnet ist.

3. Kraftfahrzeug mit E-Anlage nach Anspruch 1 oder 2, **dadurch gekennzeichnet, daß** das Batterie-Plus-Kabel (30) mindestens abschnittsweise in einem Längsträger (16) oder Hilfsrahmen, insbesondere einem Motorhilfsrahmen (18) angeordnet ist

4. Kraftfahrzeug mit E-Anlage nach einem der Ansprüche 1 bis 3, **gekennzeichnet durch** einen Generator, wobei das Batterie-Plus-Kabel (30) zur Verbindung des Generators (26) mit der Batterie (32) mindestens abschnittsweise in einem biegesteifen Fahrzeugstrukturteil (16, 18), insbesondere in oder an einem Rohrelement, insbesondere in einem Längsträger (16) oder Hilfsrahmen (18) angeordnet ist.

5. Kraftfahrzeug mit E-Anlage nach einem der Ansprüche 1 bis 4, **dadurch gekennzeichnet, daß** das Batterie-Plus-Kabel (30) in dem biegesteifen Fahrzeugstrukturteil (16, 18) lose angeordnet ist.

6. Verfahren zur Verkabelung einer E-Anlage eines Kraftfahrzeuges, bei dem ein Batterie-Plus-Kabel (30) vor der Bestückung des Kraftfahrzeuges oder einer Kraftfahrzeugbaugruppe mit einem Anlasser (28) und/oder einem Generator (26) in einem biegesteifen Fahrzeugstrukturteil (16, 22) angeordnet wird.

## Claims

1. Motor vehicle with electrical installation, the motor vehicle having an electrically driven starter motor (28) arranged in an engine compartment (10), a battery (32) supplying the starter motor (28) with electrical energy and a battery positive cable (30) connecting starter motor (28) and battery (32), wherein the battery positive cable (30) is arranged at least partially in a part (16, 22) of the vehicle structure which is resistant to bending.

2. Motor vehicle with electrical installation according to claim 1, **characterised in that** the battery positive cable (30) is arranged at least partially in a tubular element (16, 18) provided as a part of the vehicle structure which is resistant to bending.

3. Motor vehicle with electrical installation according to claim 1 or 2, **characterised in that** the battery positive cable (30) is arranged at least partially in a side member (16) or subframe, in particular an engine-supporting subframe (18).

4. Motor vehicle with electrical installation according to any one of claims 1 to 3, **characterised by** a generator, the battery positive cable (30) for connecting the generator (26) to the battery (32) being arranged at least partially in a part (16, 18) of the vehicle structure which is resistant to bending, in particular in or on a tubular element, in particular in a side member (16) or subframe (18).

5. Motor vehicle with electrical installation according to any one of claims 1 to 4, **characterised in that** the battery positive cable (30) is arranged loosely in the part (16, 18) of the vehicle structure which is resistant to bending.

6. Method for wiring an electrical installation of a motor vehicle, whereby a battery positive cable (30) is arranged in a part (16, 22) of the vehicle structure which is resistant to bending before the motor vehicle or a motor vehicle assembly is fitted with a starter motor (28) and/or a generator (26).

## Revendications

1. Véhicule automobile comprenant une installation électrique, le véhicule automobile comportant un démarreur (28) entraîné électriquement disposé dans un compartiment moteur (10), une batterie (32) approvisionnant le démarreur (28) en énergie électrique, et un câble de batterie positif (30) reliant le démarreur (28) et la batterie (32), le câble de batterie positif (30) étant disposé, au moins par sections, dans une partie structurelle de véhicule (16, 22) résistante à la torsion.

2. Véhicule automobile comprenant une installation électrique selon la revendication 1, **caractérisé en ce que** le câble de batterie positif (30) est disposé, au moins par sections, dans un élément brut (16, 18) conçu en tant que partie structurelle de véhicule résistante à la torsion.

3. Véhicule automobile comprenant une installation électrique selon la revendication 1 ou la revendication 2, **caractérisé en ce que** le câble de batterie positif (30) est disposé, au moins par sections, dans un longeron (16) ou dans un châssis secondaire, notamment dans un châssis secondaire de moteur (18).

4. Véhicule automobile comprenant une installation électrique selon l'une des revendications 1 à 3 **caractérisé par** un générateur, le câble de batterie positif (30) qui sert à relier le générateur (26) à la batterie (32) étant disposé, au moins par sections, dans une partie structurelle de véhicule (16, 18) résistante à la torsion, notamment dans ou sur un élément tubulaire, notamment dans un longeron (16) ou dans un châssis secondaire (18).

5. Véhicule automobile comprenant une installation électrique selon l'une des revendications 1 à 4, **caractérisé en ce que** le câble de batterie positif (30) est disposé de manière amovible dans la partie structurelle de véhicule (16, 18) résistante à la torsion.

6. Procédé de câblage de l'installation électrique d'un véhicule automobile, dans lequel un câble de batterie positif (30) est disposé, avant d'équiper le véhicule automobile ou un module de véhicule automobile d'un démarreur (28) et/ou d'un générateur (26), dans une partie structurelle de véhicule (16, 22) résistante à la torsion.
